**Europäisches Patentamt**

**European Patent Office**

**Office européen des brevets**

(19)

(11) Veröffentlichungsnummer: **0 390 918**
**A1**

# (12) EUROPÄISCHE PATENTANMELDUNG
## veröffentlicht nach Art. 158 Abs. 3 EPÜ

(21) Anmeldenummer: 88906827.6

(22) Anmeldetag: 29.03.88

(86) Internationale Anmeldenummer:
PCT/SU88/00071

(87) Internationale Veröffentlichungsnummer:
WO 89/08987 (05.10.89 89/24)

(51) Int. Cl.5: **A23B 4/03, A23B 4/06**

(43) Veröffentlichungstag der Anmeldung:
**10.10.90 Patentblatt 90/41**

(84) Benannte Vertragsstaaten:
**DE FR SE**

(71) Anmelder: **GOSUDARSTVENNY PROEKTNO-KONSTRUKTORSKY INSTITUT RYBOPROMYSLOVOGO FLOTA "GIPRORYBFLOT"**
**ul. Gogolya, 18-20**
**Leningrad, 190000(SU)**

(72) Erfinder: **PEKLO, Leonid Mikhailovich**
**Petergofskoe shosse, 15-2-160**
**Leningrad, 198328(SU)**
Erfinder: **SHKARIN, Alexandr Sergeevich**
**ul. Ziny Portnovoi, 17-3-26**
**Leningrad, 198207(SU)**

(74) Vertreter: **Finck, Dieter et al**
**Patentanwälte v. Füner, Ebbinghaus, Finck**
**Mariahilfplatz 2 & 3**
**D-8000 München 90(DE)**

(54) **VORRICHTUNG ZUR HITZEBEHANDLUNG VON ERZEUGNISSEN.**

(57) Die Anlage zur thermischen Produktbehandlung enthält eine Tunnelkammer 1 mit einem Fließförderer 2, einem Stutzen 3 zur Wärmeträgerzufuhr und einem Stutzen 4 zur Wärmeträgerableitung. Im Inneren der Tunnelkammer 1 sind Trennwände 5 angeordnet, die den oberen Teil des Querschnittes der Tunnelkammer 1 überdecken, jede Trennwand 5 hat verschiedentlich lange Seitenkanten 6, 7 und ist als eine gewölbte Fläche ausgeführt, wobei die Trennwände 5 mit ihrer konvexen Seite dem Stutzen 3 zur Wärmeträgerzufuhr zugekehrt und unter Aufeinanderfolge der größeren Seitenkanten 7 und der kleineren Seitenkanten 6 längs jeder Seitenwand 8 der Tunnelkammer 1 angeordnet sind.

FIG.1

## ANLAGE ZUR THERMISCHEN PRODUKTBEHANDLUNG

### Gebiet der Technik

Die Erfindung bezieht sich auf das Gebiet der Nahrungsmittelindustrie, und zwar auf Tunnelanlagen zur thermischen Behandlung von Nahrungsmitteln durch einen Wärmeträger, z.B. auf Anlagen für Erwärmung, Trocknung, Kühlung und für andere thermische Vorgänge und kann vorwiegend in Anlagen zur Wärmebehandlung von Fischen zum Einsatz kommen.

### Vorhergehender Stand der Technik

Das Hauptproblem bei Entwicklung der Anlagen zur thermischen Behandlung von Nahrungsmitteln besteht darin, daß eine optimale Betriebsart einer thermischen Produktbehandlung anzuwenden ist, die ein Produkt mit der erforderlichen Qualität bei hohen technischen-ökonomischen Kennzahlen der Anlage erzielen läßt.

Die technisch-ökonomischen Kennzahlen solcher Anlagen können unter anderem durch eine Intensivierung des Vorgangs einer thermischen Behandlung von Produkten bei einem ausreichend kleinen Energieaufwand für den Anlagenbetrieb verbessert werden.

Es ist bekannt, daß eine Intensivierung des erwähnten Vorgangs z.B. durch Gewährleistung einer mehrmaligen periodischen thermischen Einwirkung auf ein Produkt, d.h. durch wechselnde Zyklen einer thermischen Behandlung und einer Rast sowie dadurch erreicht werden kann, daß eine im Querschnitt turbulente Wärmeträgerströmung gewährleistet wird.

Bei einer mehrmaligen periodischen thermischen Einwirkung auf ein Produkt, z.B. während der Wärmebehandlung von Nahrungsmitteln bei der sequentiellen Einwirkung der Erwärmungs-und Rastzyklen bzw. bei der Kühlung bei der Einwirkung der Kälte- und Rastzyklen während der Rastperiode ein Ausgleich des Feuchtegradienten über einem Produktquerschnitt stattfindet. Dies steigert letzten Endes die Intensität einer Feuchteverdunstung aus dem Produkt und intensiviert dadurch den Vorgang der thermischen Produktbehandlung, ohne daß der Energieaufwand zusätzlich gesteigert wird.

Eine turbulente Strömung trägt, indem sie eine intensive Durchmischung eines Wärmeträgers in einer Tunnelkammer sicherstellt, zur gleichmäßigeren thermischen Produktbehandlung in der Anlagekammer bei und gewährleistet dadurch eine Intensivierung des Vorgangs einer thermischen Produktbehandlung.

Es ist eine Anlage zur thermischen Behandlung von Nahrungsmitteln, vorwiegend zur Fischtrocknung bekannt ("Spravochnik tekhnologa rybnoj promyshlennosti", V.I.Novikov u.a., 1972, S. 294), die eine Tunnelkammer mit einem Fließförderer und Stutzen zur Wärmeträgerzufuhr und -ableitung enthält. In der Tunnelkammer bewegen sich dicht nebeneinander mehrstöckige Behälter für das zu behandelnde Produkt. Die von oben und von unten her offenen Behälter weisen wenigstens je eine Seitenwand auf, die für den Wärmeträger undurchlässig ist. Die Behälter sind mit diesen Seitenwänden dem Stutzen zur Wärmeträgerzufuhr zugekehrt. Die besagten Seitenwände lenken den Wärmeträgerstrom auf das behandelte Produkt, das in den Behältern untergebracht ist.

Diese Anlage weist aber eine verhältnismäßig niedrige Intensität des Vorgangs der thermischen Produktbehandlung auf, weil keine Betriebsart einer mehrmaligen periodischen thermischen Einwirkung auf ein Produkt zustande kommt.

Außerdem ändert der Wärmeträgerstrom bei einem Umströmen der Seitenwände der Behälter mehrmals seine Richtung stark und die Fläche des Durchgangsquerschnittes für den Strom innerhalb der Behälter ist verhältnismäßig groß, darum findet eine ungleichmäßige Verteilung der Stromparameter (z.B. der Geschwindigkeit) sowohl über die Höhe der Tunnelkammer als auch über deren Querschnitt statt, d.h. es wird eine im Stromquerschnitt turbulente Wärmeträgerströmung gestört.

Bei der Störung einer im Stromquerschnitt turbulenten Wärmeträgerströmung findet eine schichtweise Ablösung des Stroms statt, was eine ungleichmäßige thermische Produktbehandlung und folglich eine Senkung der Intensität des Vorgangs der thermischen Produktbehandlung bewirkt.

Außerdem führt die mehrmalige ausreichend starke Richtungsänderung des Wärmeträgerstroms zu großen Energieverluste.

Zum Stand der Technik gehört eine Anlage zur thermischen Produktbehandlung, vorwiegend zum Räuchern und zur Trocknung von Kleinfischen (SU, A, 741840), die aus den übereinander angeordneten: einer Tunnelkammer zur Wärmevorbehandlung, einer Tunnelkammer zur Wärmehauptbehandlung und einer Ausgleichkammer besteht, die zwischen den genannten Tunnelkammern liegt.

Jede Tunnelkammer ist mit einem Fließförderer und mit Stutzen zur Wärmeträgerzufuhr und -ableitung versehen.

In den Tunnelkammern zur Wärmevor- und zur Wärmehauptbehandlung läuft zwangsläufig entgegen der Richtung einer Produktbewegung ein Wärmeträger um. Das zu behandelnde Produkt (Fisch) bewegt sich sequentiell aus der oberen Kammer in die darunter liegenden Kammern, dabei ist in der mittleren Kammer kein Wärmeträgerstrom vorhanden und folglich findet dort eine Produktrast statt, bei der ein Feuchteausgleich im Produktquerschnitt erfolgt.

In dieser Anlage findet im Unterschied von der vorstehend beschriebenen eine sequentielle Einwirkung einer Erwärmung und einer Rast auf das Produkt (Fisch) statt, wodurch die Intensität einer Feuchteverdunstung aus den Fischen gesteigert, d.h. eine Intensivierung des Vorgangs der thermischen Produktbehandlung sichergestellt wird.

Da aber in dieser Anlage eine Erwärmung und eine Rast in separaten, für jede Betriebsart vorgesehen Kammern erfolgen, ist die Dauer einer Wärmeträgereinwirkung auf das Produkt und jene einer Produktrast verhältnismäßig groß, außerdem findet kein mehrfaches Wechsel der Erwärmungs- und Rastrzyklen statt, wodurch keine ausreichende Steigerung der Intensität einer thermischen Produktbehandlung erzielt wird.

Die Anwendung einer zusätzlichen Kammer für eine Produktrast hat außerdem eine Vergrößerung der Abmessungen der Anlage zur Folge.

Außerdem ist in dieser Anlage, wie auch in der vorstehend beschriebenen, die Fläche des Durchgangsquerschnittes für den Strom verhältnismäßig groß, daher entsteht darin eine über einen Stromquerschnitt geschichtete Wärmeträgerstruktur, was die Intensität des Vorgangs der thermischen Produktbehandlung herabsetzt. Damit in dieser Anlage eine im Stromdurchgangsquerschnitt turbulente Wärmeträgerströmung erreicht wird, sind größere Einblasgeschwindigkeiten des Wärmeträgers erforderlich, deren Sicherstellen eine wesentliche Steigerung des Energieaufwandes für den Anlagenbetrieb bewirkt.

## Offenbarung der Erfindung

Der Erfindung liegt die Aufgabe zugrunde, eine Anlage zur thermischen Produktbehandlung zu schaffen, bei der in einer Tunnelkammer solche Elemente angebracht sind und diese Elemente eine derartige Form haben, daß eine mehrfache thermische periodische Einwirkung auf das in der Tunnelkammer zu behandelnde Produkt beim ausreichend kleinen Energieaufwand für den Anlagenbetrieb sichergestellt, dadurch der Vorgang der thermischen Produktbehandlung intensiviert und die Abmessungen der Anlage verkleinert werden können.

Diese Aufgabe wird ausgehend von einer Anlage zur thermischen Produktbehandlung, enthaltend eine Tunnelkammer mit einem Fließförderer, einem Stutzen zur Wärmeträgerzufuhr und einem Stutzen zur Wärmeträgerableitung, erfindungsgemäß dadurch gelöst, daß im Inneren der Tunnelkammer Trennwände angeordnet sind, die den oberen Teil des Tunnelkammerquerschnittes überdecken, daß jede Trennwand verschiedentlich lange Seitenkanten hat und als gewölbte Fläche ausgeführt ist, wobei die Trennwände mit ihren konvexen Flächen dem Stutzen zur Wärmeträgerzufuhr zugekehrt und unter Aufeinanderfolge der größeren und der kleineren Seitenkanten längs jeder Seitenwand der Tunnelkammer angeordnet sind.

Die in der Tunnelkammer angeordneten und den oberen Teil ihres Querschnittes überdeckenden Trennwände bilden einen Durchgangsquerschnitt für den Strom unter den unteren Kanten der besagten Trennwände.

Die Ausführung jeder Trennwand mit verschiedentlich langen Seitenkanten bewirkt einen der Breite nach ungleichmäßigen Durchgangsquerschnitt der Tunnelkammer. Dieser ungleichmäßige Durchgangsquerschnitt erzeugt beim Betrieb der Anlage einen über die Breite der Tunnelkammer ungleichmäßigen Widerstand dem Wärmeträgerstrom, im Ergebnis davon wird den größeren Durchgangsquerschnitt (auf der Seite der kleineren Seitenkante) eine größere Wärmeträgermenge in einer Zeiteinheit passieren und auf ein hinter der Trennwand auf der Seite der kleineren Seitenkante befindliches Produkt wird ein Wärmeträgerstrom mit der maximalen Anströmungsgeschwindigkeit einwirken, d.h. es wird eine maximale äußere thermische Einwirkung auf das Produkt erreicht und auf ein Produkt, das sich hinter der Trennwand auf der Seite der größeren Seitenkante befindet, wird ein Strom mit der minimalen Anströmungsgeschwindigkeit einwirken, wodurch eine minimale äußere thermische Einwirkung erzeugt, d.h. eine Rast des zu behandelnden Produktes sichergestellt wird. In einer Rastperiode findet ein Ausgleich des Feuchtegradienten über den Produktquerschnitt statt, wodurch letzten Endes eine Intensivierung des Vorgangs einer thermischen Behandlung von Nahrungsmitteln sichergestellt wird.

Da die Trennwände unter Aufeinanderfolge der größeren und der kleineren Seitenkanten längs jeder Seitenwand der Tunnelkammer angeordnet sind, wird der Durchgangsquerschnitt für den Strom abwechseln an gegenüberliegenden Seitenwänden der Tunnelkammer groß, wodurch beim Betrieb der Anlage eine Aufeinanderfolge der Betriebsarten der maximalen thermischen Einwirkung auf das Produkt und dessen Rast, d.h. eine mehrmalige periodische thermische Einwirkung auf das Produkt erreicht wird, die den Vorgang der thermischen Produktbehandlung intensiviert.

Die Trennwände, die den oberen Teil der Tunnelkammer überdecken und dadurch die Fläche des Durchgangsquerschittes für den Wärmeträger verkleinern, sowie ihre Ausführung in Form einer gewölbten Fläche stellen außerdem die Erzeugung einer im Querschnitt turbulenten Wärmeträgerströmung sicher, wodurch die Intensität einer thermischen Produktbehandlung auch gesteigert wird.

Da die Trennwände in Form einer gewölbten Fläche ausgeführt und mit ihrer konvexen Seite dem Stutzen zur Wärmeträgerzufuhr zugekehrt sind, ist außerdem ein beim Umströmen der Trennwände durch den Wärmeträgerstrom bei seinem Fortpflanzung längs der Tunnelkammer entstehender Widerstand unbedeutend, wodurch eine mehrmalige thermische Einwirkung auf Produkt bei einem ausreichend kleinen Energieaufwand für den Anlagenbetrieb sichergestellt sein kann.

Außerdem wird in der erfindungsgemäßen Anlage zur thermischen Produktbehandlung eine mehrfache periodische thermische Einwirkung auf das Produkt unmittelbar in der Tunnelkammer erreicht, wodurch die Abmessungen einer Anlage verkleinert sein können.

Es ist zweckmäßig, jede Trennwand in der Tunnelkammer derart anzuordnen, daß der untere Teil einer kleineren Seitenkante der Trennwand in bezug auf den unteren Teil einer größeren Seitenkante der Trennwand in der Richtung der Längsachse der Tunnelkammer versetzt ist.

Die in Form von gewölbten Flächen ausgeführten, mit ihren konvexen Seiten dem Stutzen zur Wärmeträgerzufuhr zugekehrten und in der Tunnelkammer wie vorstehend beschrieben angeordneten Trennwände bilden längs der Tunnelkammer einen Wirkbelstrom.

Wenn ein Wirkbelstrom die besagten Trennwände umströmt, wird ein bei seiner Bewegung entstehender Widerstand gesenkt, weil eine zur Wirbelbildung benötigte Energie beim Umströmen der Trennwände nicht unwiederbringlich verloren geht, sondern für eine Wirbelbewegung längs der Tunnelkammer verbraucht wird.

Auf diese Weise wird eine zusätzliche Verminderung des Energieaufwandes für den Anlagenbetrieb erreicht.

Eine Wirkbelstrombildung trägt auch zur effektiven Wärmeträgervermischung über den Stromquerschnitt bei und steigert folglich die Intensität einer thermischen Produktbehandlung.

Es ist außerdem bekannt, daß ein Wirbelstrom einen Verstärker der Schwnkungen von Wärmeträgerparametern ist, wodurch auch eine Intensivierung des Vorgangs der thermischen Produktbehandlung erreicht wird.

### Kurze Beschreibung der Zeichnungen

Die vorstehend angegebenen Vorteile sowie Merkmale der Erfindung werden bei der weiteren Betrachtung der nachstehenden ausführlichen Beschreibung der besten Ausführungsvariante der Erfindung unter Bezugnahme auf Zeichnungen ersichtlich.

Es zeigen:

Fig.1 schematisch eine erfindungsgemäße Anlage zur thermischen Produktbehandlung;

Fig.2 eine Draufsicht auf die Anlage;

Fig.3 einen Schnitt nach der Linie III-III in Fig.2 und

Fig.4 eine Ansicht der axonometrisch dargestellten Trennwände von unten.

Es ist darauf hinzuweisen, daß die Zeichnungen schematisch sind und zur Anschaulichkeit der Erfindung ohne irgendwelche Festlegung von Abmessungen der zum Bestand der erfindungsgemäßen Konstruktion der Anlage zur thermischen Produktbehandlung gehörenden Elemente, eines Verhältnisses zwischen Abmessungen dieser Elemente usw. dienen.

### Beste Ausführungsvariante der Erfindung

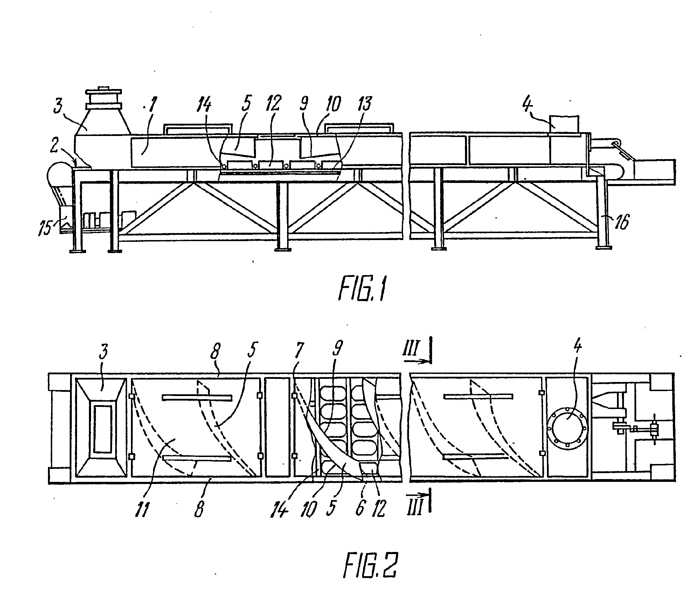

In Übereinstimmung mit Fig.1 besteht die Anlage zur thermischen Produktbehandlung aus einer Tunnelkammer 1 mit einem Fließförderer 2, einem Stutzen 3 zur Wärmeträgerzufuhr und einem Stutzen 4 zur Wärmeträgerableitung. Im Inneren der Tunnelkammer 1 sind Trennwände 5 angeordnet, die den oberen Teil des Querschnittes der Tunnelkammer 1 überdecken.

Jede Trennwand 5 hat verschiedentlich lange Seitenkanten 6, 7 (Fig.2), z.B. ist die Seitenkante 6 kleiner als die Seitenkante 7.

Die Trennwände 5 sind im Inneren der Tunnelkammer 1 unter Aufeinanderfolge der größeren Seitenkanten 7 und der kleineren Seitenkanten 6 längs jeder Seitenwand 8 der Tunnelkammer 1 angeordnet.

Die unteren Kanten 9 (Fig.3) der Trennwände 5 bilden über die Breite der Tunnelkammer 1 einen ungleichmäßigen Durchgangsquerschnitt für den Wärmeträgerstrom.

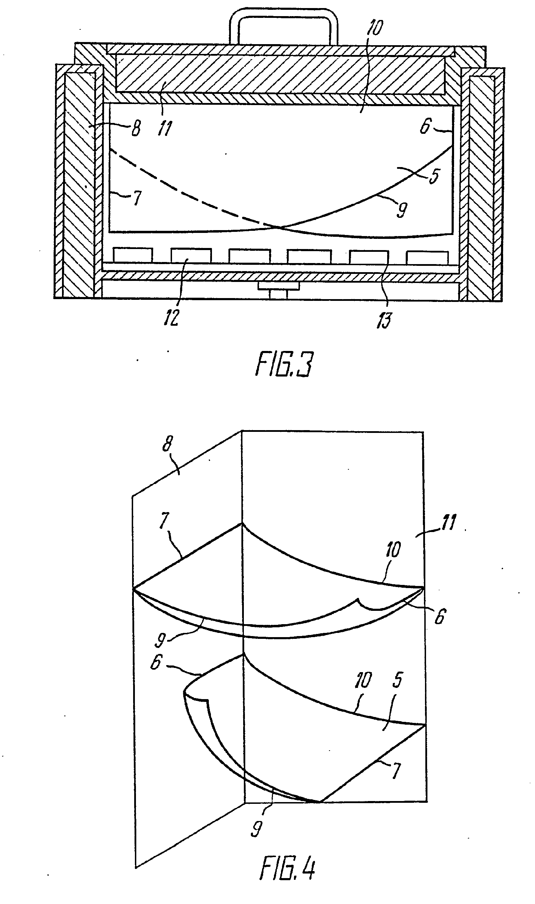

Jede Trennwand 5 (Fig.4) ist als eine gewölbte Fläche ausgeführt, dabei sind die Trennwände 5 mit ihren konvexen Seiten dem Stutzen 3 (Fig.2) zur Wärmeträgerzufuhr zugekehrt.

Dabei ist jede Trennwand 5 (Fig.4) in der Tunnelkammer 1 derart angeordnet, daß der untere Teil der kleineren Seitenkante 6 einer Trennwand 5 in bezug auf den unteren Teil der größeren Setenkante 7 der Trennwand 5 in der Richtung der Längsachse der Tunnelkammer 1 versetzt ist.

Es ist eine Variante der Anordnung der Trennwände 5 in einer Tunnelkammer denkbar, bei der die unteren Teile der größeren Seitenkanten 6 in ein und derselben Querebene der Tunnelkammer 1 liegen (nicht eingezeichnet).

Bei dieser Anordnung der Trennwände 5 wird aber in der Tunnelkammer 1 kein Wirbelstrom gebildet und folglich werden im Vergleich mit der erfindungsgemäßen besten Variante der Anlagenausführung in dieser Anlage ein bei einer Stromfortpflanzung entstehender Widerstand und folglich der Energieaufwand etwas größer, bzw. wird die Intensität des Vorgangs der thermischen Produktbehandlung ein wenig herabgesetzt.

Die Trennwände 5 sind mit ihrer oberen Kante 10 (Fig.1) an der oberen Wand 11 der Tunnelkammer 1 befestigt, wobei der Abstand der Trennwände voneinander geändert sein kann.

Ein zu behandelndes Produkt (z.B.Fisch) ist in Einzelträgern, z.B. Dosen 12 untergebracht. Die Dosen 12 befinden sich auf einer waagerechten Lamelle 13 zwischen den Stangen 14 des Fließförderers 2. Der Fließförderer 2 wird durch einen Antrieb 15 in Bewegung gesetzt.

Die Tunnelkammer 1 ist auf einem Gestell 16 montiert.

Der erforderliche Abstand der Trennwände 5 voneinander, ein Höhenverhältnis der Seitenkanten 6, 7, sowie ein Krümmungsgrad der Trennwände 5 werden in Versuchen in Abhängigkeit von Abmessungen der Tunnelkammer 1 (Länge, Breite, Höhe), von einer zu behandelnden Produktart, einem technologischen Verfahren usw. ermittelt.

Die Erfinder stellten in Versuchen fest, daß der optimale Effekt dann erreicht wird, wenn die untere Grenze eines Höhenverhältnisses der Seitenkanten 6, 7 ca. 1,2 beträgt.

Die Anlage arbeitet wie folgt.

Man schaltet den Antrieb 15 (Fig.1) ein, der die Stangen 14 des Fließförderers 1 bewegt. Zwischen den Stangen werden in Reihen die Dosen 12 mit Fischen angebracht. Bei einer Bewegung der Reihen der Dosen 12 in die Tunnelkammer 1 werden die nächsten Reihen der Dosen 12 zwischen den Stangen 14 angebracht. Gleichzeitig wird über Stutzen 3 zur Wärmeträgerzufuhr in die Tunnelkammer 1 Warmluft eingeblasen, die sich in der Tunnelkammer auf dem Wege des kleinsten Widerstandes fortpflanzt. Da die Trennwände 5 den oberen Teil des Querschnittes der Tunnelkammer 1 überdecken, pflanzt sich der Wärmeträger unter der unteren Kante 9 (Fig.3) einer Trennwand 5, die einen Durchgangsquerschnitt für den Strom in der Tunnelkammer 1 bestimmt.

Da an der Trennwand 5 die Seitenkante 6 kleiner ist als die Seitenkante 7, strömt im Bereich der kleineren Seitenkante 6 unter der unteren Kante 9 der Trennwand in einer Zeiteinheit die maximale Wärmeträgermenge durch und auf Fische in den Dosen 12, die sich hinter der Trannwand 5 (auf der Seite der kleineren Seitenkante 6) befinden, wirkt ein Wärmeträgerstrom mit der maximalen Anströmungsgeschwindigkeit ein. Auf diese Weise wird die maximale äußere thermische Einwirkung auf Fische hinter der Trennwand 5 auf der Seite der kleineren Seitenkante 6 erreicht.

Auf Fische in den Dosen 12, die sich hinter der Trennwand 5 auf der Seite der größeren Seitenkante 7 befinden, wirkt ein Strom mit der minimalen Anströmungsgeschwindigkeit ein, wodurch die minimale thermische Einwirkung erreicht wird.

Auf diese Weise wird hinter der Trennwand 5 auf der Seite der größeren Seitenkante 7 eine Fischrast sichergestellt.

Während der Rast erfolgt ein Ausgleich des Feuchtegradienten im Fischquerschnitt. Dies trägt zur Intensivierung der Feuchteverdunstung aus den Fischen und folglich des gesamten thermischen Vorgangs ohne zusätzlichen Energieaufwand bei.

Bei der fortschreitenden Bewegung der Reihen der Dosen 12 (Fig.2) in der Tunnelkammer 1 unter den darauffolgenden Trennwänden

5, die unter Aufeinanderfolge der größeren Seitenkanten und der kleineren Seitenkanten 6 längs jeder Seitenwand 8 der Tunnelkammer 1 angeordnet sind, wird eine Aufeinanderfolge der maximalen thermischen Einwirkung auf Fische und der Fischrast bewirkt. Auf diese Weise wird während der Produktbehandlang in dieser Anlage eine mehrfache periodische thermische Einwirkung auf das zu behandelnde Produkt erreicht, wodurch der Vorgang der thermischen Produktbehandlung intensiviert wird.

Da eine mehrfache periodische thermische Einwirkung auf das zu behandelnde Produkt unmittelbar in der Tunnelkammer 1 stattfindet, können die Außenabmessungen der Anlage verkleinert werden.

Da die Trennwände 5 gewölbt ausgeführt und ihre konvexen Seiten dem Stutzen 3 (Fig.2) zur Wärmeträgerzufuhr zugekehrt sind und da jede Trennwand 5 in der Tunnelkammer 1 derart angeordnet ist, daß der untere Teil der kleineren Seitenkante 6 einer Trennwand 5 in bezug auf den unteren Teil der größeren Seitenkante 7 der Trennwand 5 in der Richtung der Längsachse der Tunnelkammer 1 versetzt ist, wird in der Tunnelkammer 1 eine über den Stromquerschnitt turbulente Wärmeträgerströmung erzeugt, dabei wird ein Wirbelstrom des Wärmeträgers gebildet.

Eine turbulente Wärmeträgerströmung steigert auch die Intensität einer thermischen Produktbehandlung.

Außerdem stößt der besagte Strom bei seiner Fortpflanzung in der Tunnelkammer 1, indem er die Trennwände 5 umströmt, auf einen verhältnismäßig kleinen Widerstand und folglich ist zur Stromfortpflanzug in der Tunnelkammer 1 ein verhältnismäßig kleiner Energieaufwand erforderlich.

Also wird in dieser Anlage eine Intensivierung des Vorgangs der thermischen Produktbehandlung beim ausreichend kleinen Energieaufwand für den Anlagenbetrieb gewährleistet.

Industrielle Anwendbarkeit

Am vorteilhaftesten kann die Erfindung bei Anlagen zur thermischen Behandlung von Nahrungsmitteln, beispielsweise bei denen zur thermischen Behandlung von Fischen, die in Dosen gepackt sind.

PATENTANSPRÜCHE:

1. Anlage zur thermischen Produktbehandlung, enthaltend eine Tunnelkammer 1 mit einem Fließförderer 2, einem Stutzen 3 zur Wärmeträgerzufuhr und einem Stutzen 4 zur Wärmeträgerableitung, d a d u r c h  g e k e n n z e i c h n e t , daß im Inneren der Tunnelkammer 1 Trennwände 5 angebracht sind, die den oberen Querschnittsteil der Tunnelkammer 1 überdekken, daß jede Trennwand 5 verschiedentlich lange Seitenkanten 6, 7 aufweist und als eine gewölbte Fläche ausgeführt ist, wobei die Trennwände 5 mit ihrer konvexen Seite dem Stutzen 3 zur Wärmeträgerzufuhr zugekehrt und unter Aufeinanderfolge der größeren Seitenkanten 7 und der kleineren Seitenkanten 6 längs jeder Seitenwand 8 der Tunnelkammer 1 angeordnet sind.

2. Anlage nach Anspruch 1, dadurch gekennzeichnet, daß jede Trennwand 5 in der Tunnelkammer 1 derart angeordnet ist, daß der untere Teil der kleineren Seitenkante 6 der Trennwand 5 in bezug auf den unteren Teil der größeren Seitenkante 7 der Trennwand 5 in der Richtung der Längsachse der Tunnelkammer 1 versetzt ist.

FIG.1

FIG.2

FIG.3

FIG.4

# INTERNATIONAL SEARCH REPORT

International Application No PCT/SU 88/00071

**I. CLASSIFICATION OF SUBJECT MATTER** (if several classification symbols apply, indicate all)

According to International Patent Classification (IPC) or to both National Classification and IPC

IPC⁴    A23B 4/04, 4/06

**II. FIELDS SEARCHED**

| Minimum Documentation Searched⁷ | |
|---|---|
| Classification System | Classification Symbols |
| IPC⁴ | A23B 4/00-4/06, A23L 3/00-3/04 |

Documentation Searched other than Minimum Documentation
to the Extent that such Documents are Included in the Fields Searched

**III. DOCUMENTS CONSIDERED TO BE RELEVANT**

| Category | Citation of Document, with indication, where appropriate, of the relevant passages | Relevant to Claim No. |
|---|---|---|
| A | SU, A1, (Naucno-issledovatelsky i konstruk-torsky institut mekhanizatsii rybnoi promyshlennosti) 14 December 1976 (14.12.76) see column 2,lines 14-25, column 3,lines 1-4,figure 1 | 1,2 |
| A | SU, A, 4716820 (Robert M. Stuck) 05 January 1988 (05.01.88) see column 2,lines 23-33 figure 1 | 1,2 |
| A | US, A, 4387630 (Canadian Patents & Development Limited) 14 June 1983 (14.06.83) see column 2,lines 10-16,figure 1 & DK, A, 295182 (21.02.83) EP, B1, 73095 (05.11.86) JP, A2, 58-32711 (25.02.83) CA, A1, 1162100 (14.02.84) AU, B2, 562986 (25.06.87) | 1,2 |

-----------------

\* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 11 December 1988 (11.12.88) | 28 December 1988 (28.12.88) |
| International Searching Authority | Signature of Authorized Officer |
| ISA/SU | |

Form PCT/ISA/210 (second sheet) (January 1985)